# FASCICULE DE BREVET EUROPEEN

(11) **EP 0 786 122 B1**
(45) Date de publication et mention de la délivrance du brevet: **17.02.1999**
(21) Numéro de dépôt: 95934690.9
(22) Date de dépôt: 12.10.1995
(51) Int. Cl.: G07F 17/30, G11B 27/00

(54) **SYSTEME DE REPRODUCTION AUDIOVISUELLE NUMERIQUE INTELLIGENT**
NUMERISCHES, INTELLIGENTES, AUDIOVISUELLES REPRODUKTIONSSYSTEM
INTELLIGENT DIGITAL AUDIOVISUAL PLAYBACK SYSTEM

(30) Priorité: 12.10.1994 WO PCT/FR94/01185; 11.07.1995 FR 9508391
(43) Date de publication de la demande: 30.07.1997
(73) Titulaire: TECHNICAL MAINTENANCE CORPORATION, Las Vegas, NV 89104 (US)
(72) Inventeur: NATHAN, Guy, F-91330 Yerres (FR); MASTRONARDI, Tony, Pierrefonds, Québec H8Y 3L2 (CA)
(74) Mandataire: Debay, Yves
(86) Numéro de dépôt international: FR9501333
(87) Numéro de publication internationale: WO9612256

(56) Documents cités:
- EP-A- 0 313 359
- WO-A-93/18465
- GB-A- 2 259 398

## Description

La présente invention concerne un système de reproduction audiovisuelle déclenché par paiement de redevances (voir WO-A-9318465).

De tels systèmes de reproduction audiovisuelle sont généralement rencontrés dans des cafés ou dans des pubs. Ce type de système est en fait constitué d'une machine de reproduction sonore appelée ordinairement juke-box associée à un moniteur assurant la visualisation d'images vidéo ou de clips vidéo. Pour cela, le juke-box est équipé d'un lecteur de disques compacts vidéo et d'une discothèque de disques compacts vidéo et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audiovisuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique, en conséquence, que le système soit de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais mais ne peuvent cependant pas pour autant être éliminés. Outre cet inconvénient, l'inconvénient suivant est présenté du fait que les sociétés gérant et distribuant ces systèmes mettent dans le circuit un nombre limité de disques identiques et imposent une certaine rotation chez leurs clients, ce qui implique parfois pour ces derniers une attente désagréable lorsqu'un disque n'est pas disponible.

Par ailleurs, il est connu par la demande de brevet PCT/WO 93 18465 des juke-boxes informatisés permettant de recevoir à travers un réseau de télécommunication et un modem connectant le juke-boxes au réseau, des informations numérisées constituant des chansons ou morceaux musicaux téléchargés dans une mémoire de masse du juke-boxes. Le système de communication sert également au téléchargement de fichiers représentatifs d'informations graphiques numérisées, les chansons et les fichiers graphiques étant compressés avant leur envoi sur le réseau. Le processeur du juke-boxes exploite ensuite ces fichiers en les décompressant et en envoyant les données graphiques au circuit vidéo et les données de la chanson au circuit audio.

Toutefois, le processeur gère également les interfaces homme machine et la gestion de ces différents éléments se fait séquentiellement en affichant les images graphiques représentatives de la chanson, ensuite en répondant à l'actionnement des touches par l'utilisateur puis en recherchant si l'utilisateur a payé les montants souhaités et enfin, lorsque le montant souhaité a été réglé, à déposer la sélection dans une file en vue de son exécution ultérieure. Par ailleurs ce système ne peut fonctionner qu'en affichant d'abord les images graphiques et en lançant ensuite l'exécution de la chanson car le processeur ne peut, d'après les logigrammes, exécuter deux taches en même temps. Enfin, les représentations graphiques sont uniquement des données digitalisées par une table scanner de la couverture de l'album de la chanson. En aucun cas un tel juke-box ne permet l'affichage d'images animées en même temps que le diffusion de chanson ou de musique. De même le processeur étant utilisé pour la décompression et le traitement des informations numériques en vue de la transformation en signaux audio, ne pourra prendre en compte de nouvelles actions d'un utilisateur qui rechercherait à effectuer une nouvelle sélection. Ceci apparaît clairement, notamment en page 12 de la demande PCT lignes 25 à 37. La sélection de nouvelles chansons ne peut se faire que dans le cas où le juke-boxes est en mode attractif, c'est-à-dire dans le mode où il affiche successivement des représentations graphiques des différentes chansons stockées dans le juke-boxes.

Il est également connu, par le brevet américain 4,956,768, un serveur large bande pour transmettre de la musique ou des images constituées par un processeur principal communiquant par un canal DMA avec un disque dur et des cartes de sortie contrôlées chacune par un processeur local supplémentaire qui gère un mode alternatif d'accès à deux mémoires tampon A et B et dont l'une, A, est utilisée pour délivrer par exemple des données musicales à un utilisateur tandis que l'autre est remplie. Chacune des cartes de sortie est reliée à une station de consultation qui peut être locale et située dans les mêmes locaux que le serveur ou à distance et reliée par un réseau de communication audio ou vidéo. Le serveur reçoit les données bloc par bloc et s'assure que les parités des échantillons sont correctes et refuse le bloc incluant plus de deux échantillons successifs faux. Chacun des blocs est naturellement désigné par un numéro. Une fois qu'un bloc a été accepté, il peut être stocké sur le disque dur local en enregistrant son numéro d'ordre qui n'a aucune relation avec son adresse physique sur le disque dur. Les stations de consultation ont des sorties audio et vidéo tels que des haut-parleurs ou des écouteurs et un moniteur télévision permettant l'écoute de la musique ou la visualisation d'images en réponse à des demandes reçues de terminaux inclus dans les stations de consultation. Dans un tel système, les stations de consultation où le premier processeur de communication doit avoir un logiciel spécifique de gestion des requêtes de sélection de morceaux musicaux ou vidéo. Ce n'est que lorsque la requête a été effectuée et adressée au processeur du serveur large bande que celui-ci peut transférer, sous l'autorité du processeur local, les données dans les mémoires tampon de façon à ce que ce processeur local assure le convoyage des données vers les stations de consultation. Il est, en outre, bien précisé que le remplissage des cartes de sortie et des mémoires tampon n'est effectué qu'après avoir reçu l'autorisation du processeur local de la carte.

Par conséquent, un tel système ne peut fonctionner que dans le cadre d'un dispositif multiprocesseur et ne suggère nullement l'utilisation d'un tel serveur pour un juke-box contrôlé par un seul processeur fonctionnant dans un environnement multitâche. Un tel système suggéré par le brevet américain met donc en oeuvre une installation complexe permettant de délivrer un service à plusieurs stations de consultation; cette installation complexe est donc onéreuse et incompatible avec un système à juke-boxes dont le prix de revient doit être le plus réduit possible.

La présente invention a pour but de remédier aux divers inconvénients présentés ci-dessus par les systèmes de l'art antérieur et propose un système de reproduction audiovisuelle numérique intelligent, permettant l'affichage d'images animées en même temps que l'exécution de morceaux musicaux et de chanson avec une grande qualité de reproduction ainsi que des possibilités de téléchargement sans pour autant grever lourdement le budget d'un tel appareil.

Ce but est atteint par le fait que le système de reproduction audiovisuelle déclenché par paiement de redevances, élaboré autour d'un dispositif à microprocesseur associé à un dispositif de paiement, comportant d'une part principalement des moyens de mémorisation de masse, pour entre autres stocker, sous forme numérique compressée les informations visuelles et sonores à exploiter, et d'autre part associé, par l'intermédiaire d'interfaces, à des moyens numériques de visualisation et des moyens numériques de reproduction sonore permettant de créer un univers multimédia est caractérisé en ce que l'ensemble est géré au moyen d'un système d'exploitation multitâche incluant une librairie d'outils et de services intégrée dans les moyens de mémorisation, le noyau du système d'exploitation associant à chacun des moyens périphériques une tâche et affectant la priorité la plus élevée à la tâche visualisation et une priorité de niveau deux à la tâche son, au moins deux tampons utilisés alternativement pour le stockage temporaire des données à décompresser étant reliés à chaque moyen respectif de visualisation et de reproduction sonore pour permettre le traitement de l'information transférée à l'un des moyens pendant le traitement d'un transfert vers un autre moyen par le système d'exploitation et un module superviseur du système d'exploitation associant un tampon de statut positionné à une valeur représentative de l'activité d'une tâche dès qu'un des tampons de stockage temporaire contient des données.

Selon une autre particularité le système de reproduction audiovisuelle est de plus, associé, par l'intermédiaire d'une interface, à un modem de télécommunications, ledit système étant alors connecté à un réseau de distribution d'informations audiovisuelles au moyen du modem de télécommunications et de liaisons de télécommunications, cette fonction de télécommunications étant également gérée par le système d'exploitation multitâche inclus dans la librairie d'outils et de services intégrée dans les moyens de mémorisation avec une priorité de niveau trois et associant a cette tâche de télécommunication un tampon temporaire de stockage des données à transférer et un tampon indicatif du statut de cette tâche

Selon une autre particularité le système d'exploitation comporte un module de résolution des priorités qui en fonction des priorités affectées aux tâches déclarées actives va accuser réception de la requête d'une tâche ou répondre par un signal d'occupation, un module superviseur qui en fonction des tâches déclarées actives et de la disponibilité des ressources matérielles suffisantes remplit une file d'attente de requêtes de mémorisation.

Selon une autre particularité un tampon temporaire de stockage des données provenant d'une interface homme machine et un tampon indicatif du statut de cette tâche d'interface homme machine est associé à une tâche d'interface telle que la sélection de zones sur un écran tactile, chaque zone correspondant à un choix parmi les informations affichées sur les moyens de visualisation.

Selon une autre particularité la tâche de priorité la plus basse est celle de gestion par le gérant pour, à partir d'une télécommande dont l'utilisation est validée par un commutateur de clé, effectuer la gestion de la base de donnée pour acquérir de nouvelles sélections ou effectuer toutes sorte de réglages commandables par la télécommande.

Selon une autre particularité il comporte un fichier statut d'opération du système maintenu sur le disque dur dans lequel le système enregistre les informations concernant l'entrée d'argent, l'ajout d'une sélection dans la file d'attente, la fin d'une sélection pour passer à la sélection suivante de façon à permettre au système de redémarrer exactement au même endroit dans le cas d'une interruption due à une panne.

Selon une autre particularité les moyens de visualisation comportent principalement un moniteur vidéo pour la reproduction des images des informations audiovisuelles et un écran tactile de contrôle et d'assistance sur lequel peuvent être sélectionnés au moins quatre tableaux de contrôle, un premier tableau de sélection de titres se déroulant pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audiovisuelles, un quatrième tableau de statistiques, d'utilisation privée, pour les estimations et les calculs statistiques relatifs aux titres.

Selon une autre particularité le dispositif de télécommande infrarouge permet de réaliser au moins une des fonctions suivantes:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Selon une autre particularité un module de mode de gestion permet d'enregistrer dans un fichier les paramètres d'exploitation du système mémorisé sur le disque dur dans un format machine non lisible pour un utilisateur, les informations sauvegardées sur le disque étant relues à chaque démarrage du système.

Selon une autre particularité le fichier des paramètres d'exploitation du système permet de fixer le prix d'un titre ou le nombre de titres pour une valeur prédéterminée, le délai d'inactivité avant d'enclencher le mode promotionnel visuel, le délai d'inactivité avant d'enclencher une source auxiliaire telle que la radio par exemple, le délai d'inactivité avant d'enclencher le mode d'échantillonnage des sélections, l'endroit déterminé en secondes à partir du début où le système pourra démarrer l'échantillonnage d'une sélection, la durée en secondes de l'échantillon.

D'autres avantages et particularités de l'invention apparaîtront à la lecture de la description suivante, faite en référence aux dessins annexés, donnés à titre d'exemple illustratif mais non limitatif d'une réalisation de l'invention, dans lesquels:

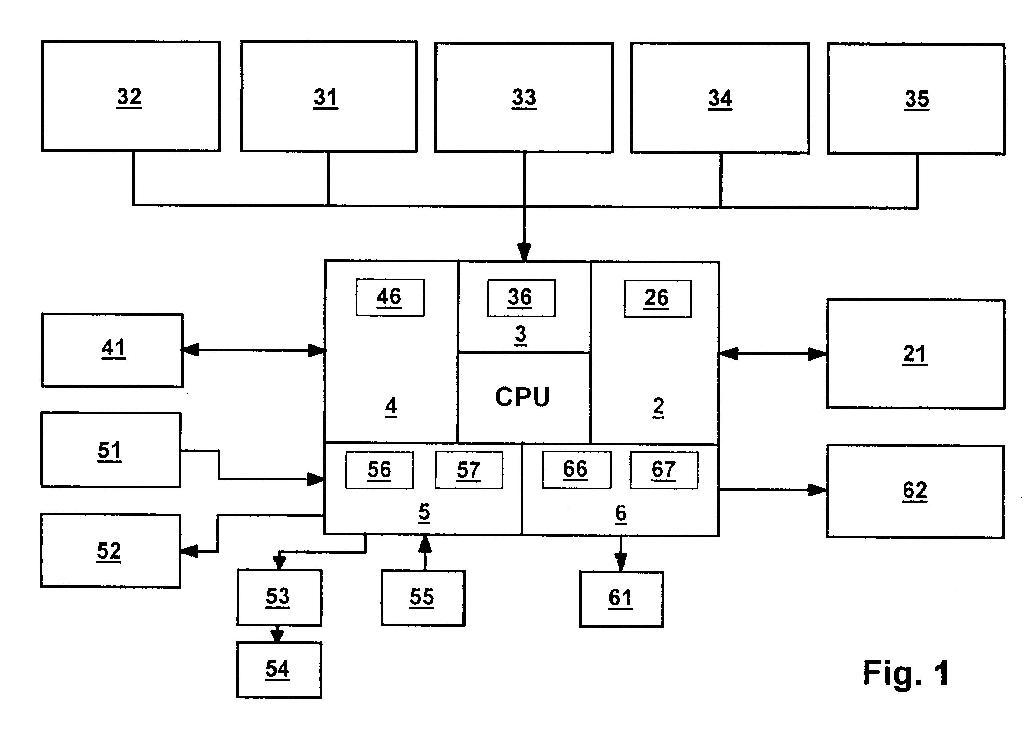

La figure 1 représente un schéma électrique du matériel constituant l'invention;
La figure 2 représente un organigramme faisant apparaître les modules de services spécifiques d'une tâche et géré au moyen du système d'exploitation multitâche, l'ensemble des modules étant inclus dans une librairie stockée dans les moyens de mémorisation.
La figure 3 représente l'organisation du système multitâches gérant l'ensemble des moyens matériels et logiciels;
La figure 4 représente un logigramme de description du fonctionnement du système de gestion multitâches;
La figure 5 représente le logigramme de vérification d'activité des tâches.
La figure 6 représente le logigramme de mise en file d'attente des sélections.

De préférence, mais cependant de manière non limitative, le système de reproduction audiovisuelle utilise les éléments matériels énumérés et référencés ci-après.

L'unité centrale 1 à microprocesseur est un système compatible PC de haute performance, le choix lors de la mise en oeuvre s'est porté sur un système du type Intel 80486 DX/2 qui possède des moyens de mémorisation et les caractéristiques suivantes:
- compatibilité avec le bus local Vesa,
- antémémoire du processeur: 256 kO,
- mémoire vive: RAM de 32 MO
- ports série et parallèle de haute performance,
- adaptateur graphique type SVGA à microprocesseur
- contrôleur de bus type SCSI/2,
- mémoire vive RAM statique auto-alimentée.

Tout autre unité centrale possédant des performances équivalentes ou supérieures pourra être utilisée dans l'invention.

Cette unité centrale commande et gère une circuit de commande de son (5), un circuit (4) de commande des télécommunications, un circuit (3) de commande des entrées, un circuit (2) de commande de la mémorisation de masse, un circuit (6) de commande des moyens de visualisation. Les moyens de visualisation se composent principalement d'un moniteur vidéo (62) à écran plat de 14 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo,

Des moyens de mémorisation de masse (21) utilisant des disques durs de type SCSI haute vitesse et haute capacité, sont associés aux moyens de mémorisation déjà présents dans le dispositif à microprocesseur. Ces moyens servent au stockage d'informations audiovisuelles numérisées et compressées.

Un adaptateur de modem de télécommunications (41) haute vitesse 28,8 kbps est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur - tuner (53) relié au circuit électronique (5) de type synthétiseur de musique prévu pour supporter un grand nombre de sources d'entrée tout en fournissant une sortie présentant une qualité de type CD (disque compact), telle que par exemple l'adaptateur audio multimédia à microprocesseur, du type carte "Sound Blaster" SBP32AWE de chez Creative Labs Inc sur lequel deux tampons mémoire (56, 57) sont ajoutés dans le but explicité ultérieurement.

De même le circuit de commande des moyens de visualisation comporte également deux mémoires tampon (66, 67) dans le but explicité ultérieurement.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet d'afficher sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).
le circuit d'entrée (3) interface également avec le système un ensemble télécommande (31) constitué, par exemple:
- d'une télécommande infrarouge de chez Mind Path Technologies Inc., émetteur qui possède 15 touches de commande pour le système à microprocesseur et 8 touches de commande pour dispositif de projection.
- d'un récepteur infrarouge avec adaptateur série de chez Mind Path Technologies Inc.

Un dispositif de paiement de redevances (35) de chez National Rejectors Inc., est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement

Pour loger le système, il est de plus prévu un châssis ou bâti en acier avec garnitures extérieures personnalisables.

Outre ces éléments, un microphone (55) sans fil est relié au contrôleur de son (5), ce qui permet de transformer ce dernier en un puissant système d'annonces et d'informations destinées au public ou éventuellement en machine de karaoké. De même un système de haut-parleurs sans fil peut être utilisé par le système.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun de façon alternative une information correspondant à un quart de seconde de son. De même deux tampons (66, 67) sont associés au circuit contrôleur de vidéo (6) capables chacun et alternativement de mémoriser un dixième de seconde d'images. Enfin un tampon respectif (46, 36, 26) est associé à chacun des circuits de contrôleur de communication (4), d'interface d'entrée (3) et de mémorisation (2).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité

Les données audiovisuelles numérisées et compressées sont stockées dans les moyens de mémorisation (21).

Chaque sélection est disponible selon deux formats numérisés: avec une qualité hi-fi ou une qualité CD.

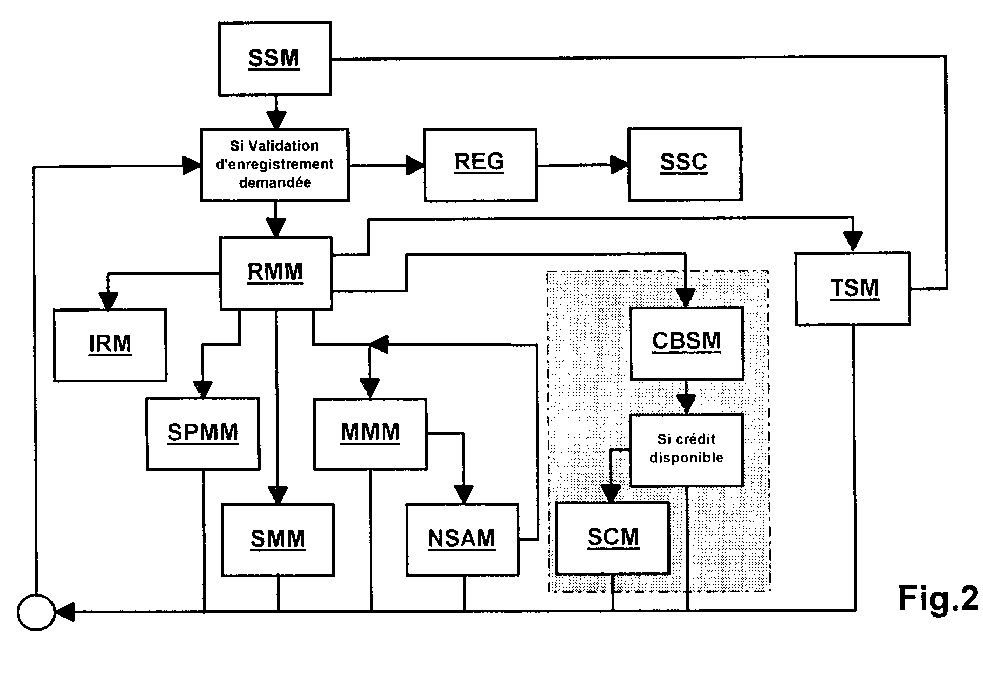

Préalablement à la description et à la lecture de cet organigramme de la figure 2, il est essentiel de noter que, bien que tous ces modules décrits séparément semblent être utilisés d'une manière séquentielle, en réalité, les tâches spécifiques de ces modules sont exécutées simultanément dans un environnement utilisant le système d'exploitation multitâche. Par conséquent, l'organigramme indique des opérations spécifiques qu'un module doit effectuer et non un branchement vers ce module qui invaliderait toutes les opérations effectuées par les autres modules.

Le premier module, référencé SSM, est le module de démarrage du système. Ce module ne fournit qu'un seul service, par conséquent il se charge automatiquement au moment de la mise sous tension du système. Si le système est démarré avec un numéro d'enregistrement correct, il rentre alors directement dans le mode "en service" du module référencé RMM.

Le module REG est le module de mode d'enregistrement qui, lorsqu'il est activé pour la première fois ou lorsqu'une approbation pour un nouvel enregistrement est nécessaire, indique son numéro de série de logiciel et demande que l'utilisateur entre ses coordonnées telles que le nom de l'établissement, l'adresse et le numéro de téléphone.

Le module RMM est le module du mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple:
- des clients qui touchent l'écran: lorsqu'un client ou un utilisateur touche l'écran, le système transfère le contrôle de sa session de premier plan au module CBSM du mode de sélection et d'exploration client,
- des requêtes d'appel serveur du réseau de télécommunications: lorsque le système détecte une boucle sur la ligne téléphonique, il émet une procédure asynchrone d'arrière-plan: le mode de services télécom du module TSM,
- des requêtes concernant le commutateur de clé (32): lorsque le gérant tourne le commutateur de clé, le système donne le contrôle de sa session de premier plan au module SMM de mode de gestion,
- la réception d'un signal de télécommande: quand une commande est reçue, elle est traitée dans une session d'arrière-plan par le module SMM de commandes système alors que la session de premier plan reste disponible pour d'autres interventions,
- l'apparition d'une fin de temporisation montrant l'inactivité du système: lorsque l'un des différents temporisateurs est activé, le contrôle est temporairement donné au module IRM de routines d'inactivité pour traitement.

Le système reste dans le mode "en service" jusqu'à ce que l'un des événements décrits ci-avant se produise.

Le module IRM est le module de routines d'inactivité. Ce module contient des routines réalisant des fonctions prédéterminées telles que l'affichage de la couverture d'un album, l'émission de parties de morceaux musicaux présents dans le système, la reproduction de sélections complètes à des fins promotionnelles internes, des reproductions audio à des fins promotionnelles externes, des annonces promotionnelles parlées de nouvelles sélections musicales, le repli vers une source auxiliaire auxquelles il peut être fait appel lorsque le système est en inactivité et qu'une période de temps prédéfinie mais réglable, correspondant à une temporisation, s'est écoulée.

Le module SCM est le module de commandes système. Ce module permet de réaliser des fonctions qui commandent au système d'accepter une entrée demandée par un dispositif de télécommande infrarouge, ces fonctions étant instantanément traitées sans que le processus en train de se dérouler ne soit arrêté. Un très grand nombre de telles fonctions sont possibles, seules quelques unes sont, de manière non limitative, ci-dessous listées:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

Le module MMM est le module de mode de gestion. Ce module est déclenché lorsque le commutateur de clé est tourné par le gérant. L'affichage de l'écran ordinaire est remplacé par un affichage spécifique à la gestion des systèmes et des paramètres d'exploitation du système. A l'aide de cet écran, il est possible de contrôler les paramètres d'opération du système tels que :
- niveau du "master volume" ;
- niveau du volume du juke-box ;
- niveau du volume de l'entrée auxiliaire (radio) ;
- niveau du volume du microphone ;
- niveau des basses ;
- niveau des aigus ;
- le prix d'un titre pour une valeur prédéterminée;
- le délai d'inactivité avant d'enclencher le mode promotionnel visuel ;
- le délai d'inactivité avant d'enclencher la source auxiliaire (radio) ;
- le délai d'inactivité avant d'enclencher le mode d'échantillonnage des sélections ;
- l'endroit (en secondes à partir du début) où démarrer l'échantillonnage
- durée (en secondes) de l'échantillon.

Toutes les valeurs ajustées à l'aide de cet écran de contrôle sont sauvegardées sur disque et relues à chaque démarrage du système.

Le fichier contenant les valeurs de contrôle sur le disque est dans un format machine qui n'est pas lisible. Le fichier ne prend pas plus de 128 octets d'espace disque au total.

Avec ce nouvel affichage le gérant est capable de contrôler tous les réglages qui sont réalisables avec la télécommande. Il peut également prendre le contrôle de commandes de bas niveau additionnelles permettant par exemple de définir les commandes à valider ou à invalider sur la télécommande. Il est aussi capable de définir un maximum de hauts et bas niveaux pour chaque source de sortie du système, ces limites définissant la gamme disponible sur la télécommande. A partir de cet écran, le gérant est capable d'accéder au mode d'acquisitions de nouvelles sélections en touchant un bouton repéré sur l'écran tactile qui lance l'exécution du module statisitque NSAM. Lorsque le gérant a achevé de définir ces commandes ainsi que la configuration du système, il suffit alors qu'il enlève la clé et le système retourne automatiquement au mode "en service".

Le module NSAM est le module de mode d'acquisitions de nouvelles sélections.

Le module CBSM est le module de mode de sélection et d'exploration client. L'accès à ce module est déclenché à partir du mode "en service" lorsque le client touche l'écran. L'affichage permet à l'usager de visualiser un menu prévu pour une exploration puissante assistée par des messages vocaux numérisés pour le guider dans son choix de sélections musicales.

Le module TSM est le module de mode de services de télécommunications entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible.

Le module SSC est le module de contrôle de sécurité du système. Ce module assure la gestion de la sécurité, chaque système se met en rapport avec un système contrôleur local selon un schéma temporel préétabli pour l'acquisition du signal d'approbation, sous la forme du numéro d'enregistrement, l'autorisant à fonctionner. En outre, s'il est constaté une fraude ou si le système ne peut plus communiquer au travers du réseau, ledit système s'arrête automatiquement de fonctionner

Le module SPMM permet la gestion des sélections de musiques chansons ou vidéo mises en file d'attente par le système en vue de leur exécution dans l'ordre de sélection.

Enfin le module SMM permet la gestion à distance des réglages du système par le gérant à l'aide de la télécommande.

Le système d'exploitation multitâches constitue l'élément essentiel pour permettre l'exécution simultanée de multiples fragments de codes et pour gérer les priorités entre les différentes tâches qui se réveillent

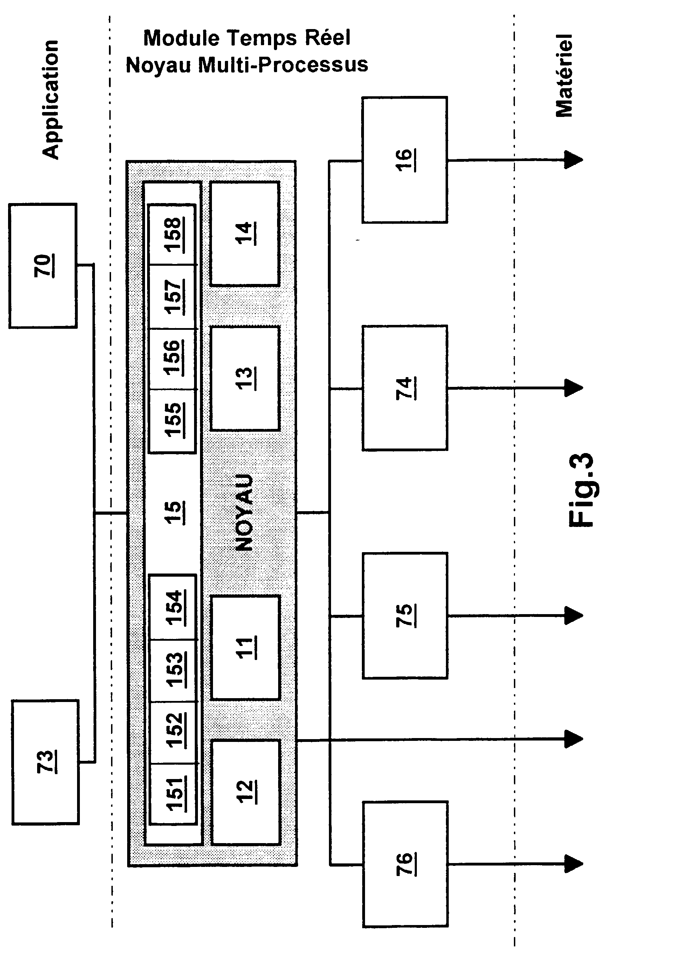

Ce système d'exploitation multitâche est organisé, comme représenté à la figure 3, autour d'un noyau comportant un module (11) de résolution des priorités entre tâches, d'un module (12) superviseur des tâches, d'un module (13) de sérialisation du matériel utilisé et un module (14) de communication des processus. Chacun des modules communique avec des interfaces (15) de programmation des applications et la base de donnée (16). Il y a autant d'interface de programmation qu'il y a d'applications. Ainsi le module (15) comporte une première interface (151) de programmation pour le commutateur à clé (32), une deuxième interface (152) de programmation pour la commande à distance (31), une troisième interface (153) de programmation pour l'écran tactile (33), une quatrième interface (154) de programmation pour le clavier (34) une cinquième interface (155) de programmation pour le dispositif de paiement (35), une sixième interface (156) de programmation pour le circuit de contrôle du son (5), une septième interface (157) de programmation pour le circuit (6) de contrôle de la vidéo et une dernière interface (158) pour le circuit (4) de contrôle des télécommunications.

Cinq tâches ayant un ordre de priorité décroissant sont gérées par le noyau (kernel) du système d'exploitation, la première (76) pour les entrées sorties vidéo a la priorité la plus élevée, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (11) de résolution des priorités au fur et à mesure de l'apparition ou de la disparition d'une tâche. Ainsi dès qu'une tâche vidéo apparaît, les autres tâches en cours d'exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse (21) alternativement vers l'un des deux tampons (66, 67) tandis que l'autre tampon (67, respectivement 66) est utilisé par le circuit (6) contrôleur de vidéo pour produire l'affichage après décompression des données. En entrée la tâche vidéo (76) a pour objet de transférer les données reçues dans le tampon de télécommunication (46) vers la mémoire de masse (21). Il en est de même pour la tâche son (75), d'une part en entrée entre le tampon de télécommunication (46) et le tampon (26) de la mémoire de masse (21)et d'autre part en sortie entre le tampon (26) de la mémoire de masse (21) et l'un des deux tampons (56, 57) du circuit (5) contrôleur de son.

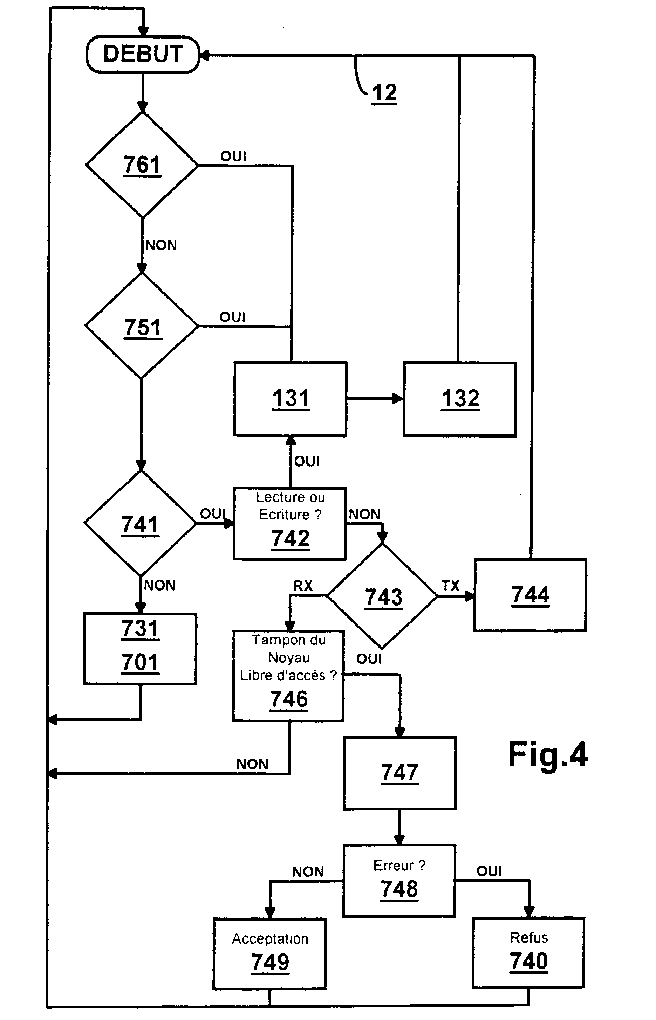

Le module superviseur de tâche (12) va maintenant être décrit en liaison avec la figure 4. Ce module effectue dans l'ordre de priorité un premier test (761) pour déterminer si la tâche vidéo est active, c'est à dire si un des tampons vidéo (66, 67) est vide. Dans le cas où la réponse est négative le module superviseur de tâche passe au test suivant qui est un second test (751) pour déterminer si la tâche son est active, c'est à dire si un des tampons (56, 57) est vide. En cas de réponse négative un troisième test (741) détermine si la tâche communication est active, c'est à dire si le tampon (46) est vide. Après une réponse affirmative à l'un des test, le module superviseur de tâche (12) remplit à l'étape (131) la file de requête (13) d'accès mémoires et exécute à l'étape (132) cette requête en lecture ou en écriture entre la mémoire de masse (21) et le tampon correspondant à la tâche active, puis reboucle sur le premier test. Lorsque le test (741) sur l'activité d'une communication est affirmatif le superviseur (12) effectue un test (742) pour déterminer s'il s'agit de lire ou d'écrire de l'information en mémoire. Si oui la requête d'écriture ou de lecture est mise dans la file à l'étape (131). Dans le cas contraire le superviseur détermine à l'étape (743) s'il s'agit d'une transmission ou d'une réception et dans le cas d'une transmission envoie par l'étape (744) le bloc d'information au serveur central. Dans le cas d'une réception le superviseur vérifie à l'étage (746) que les tampons du noyau sont libres d'accès et dans l'affirmative envoie un message au serveur central pour accepter la réception d'un bloc de donnée à l'étape (747). Après la réception d'un bloc, un contrôle d'erreur (748) est effectué du type de redondance cyclique CRC (cyclic redundant check). Le bloc est refusé à l'étape (740) en cas d'erreur, ou accepté dans le cas contraire, à l'étape (749), par l'envoi d'un message correspondant au serveur central signifiant que le bloc portant un numéro déterminé est refusé ou accepté, puis reboucle sur les tests de départ. Dans le cas où aucune tâche de niveau supérieur est active le superviseur effectue à l'étape (731 ou 701) le traitement des tâches d'interface ou de gestion.

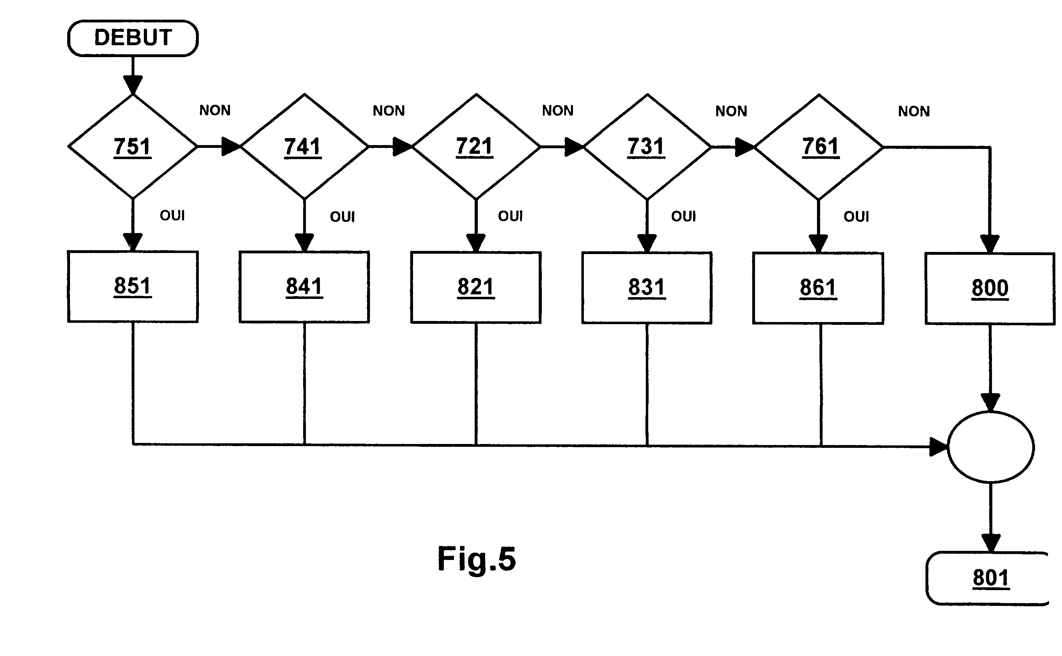

La détection d'une tâche active ou prête se fait comme représenté à la figure 5 par un test respectivement (721 à 761) sur chacun des tampons matériels ou logiciels respectifs (26) du disque dur, (36) d'interface, (46) de télécommunication, (56 et 57) de son, (66 et 67) de la vidéo qui sont associé avec chacun des circuits contrôleurs respectifs (2, 3, 4, 5, 6) de chacun des dispositifs matériels associés à l'unité centrale (1). Si un ou plusieurs de ces tampons sont remplis de données le superviseur (12) positionne le ou les tampons de statut respectifs (821) pour le disque dur, (831) pour l'interface, (841) pour les télécommunications, (851) pour le son, (861) pour la vidéo correspondant au matériel à un état logique illustratif de l'activité. Dans le cas contraire les tampons de statut du superviseur sont remis à l'étape (800) à une valeur illustrative de l'inactivité.

Le statut d'opération du système est maintenu sur disque dur.

A chaque fois qu'un événement notable est enclenché, le système l'enregistre immédiatement sur le disque.

Ainsi, dans l'éventualité où surviendrait une panne électrique ou encore un bris d'équipement, le système sera en mesure de redémarrer exactement au même endroit où il a été interrompu.

Les événements qui engendrent la sauvegarde du statut à opération sont :
- entrée d'argent (l'ajout de crédits) ;
- l'ajout d'une sélection dans la file d'attente ;
- la fin d'une sélection (changement de la sélection présentement en écoute).

Le fichier est dans un format machine seulement lisible par l'unité et ne prend pas plus de 64 octets.

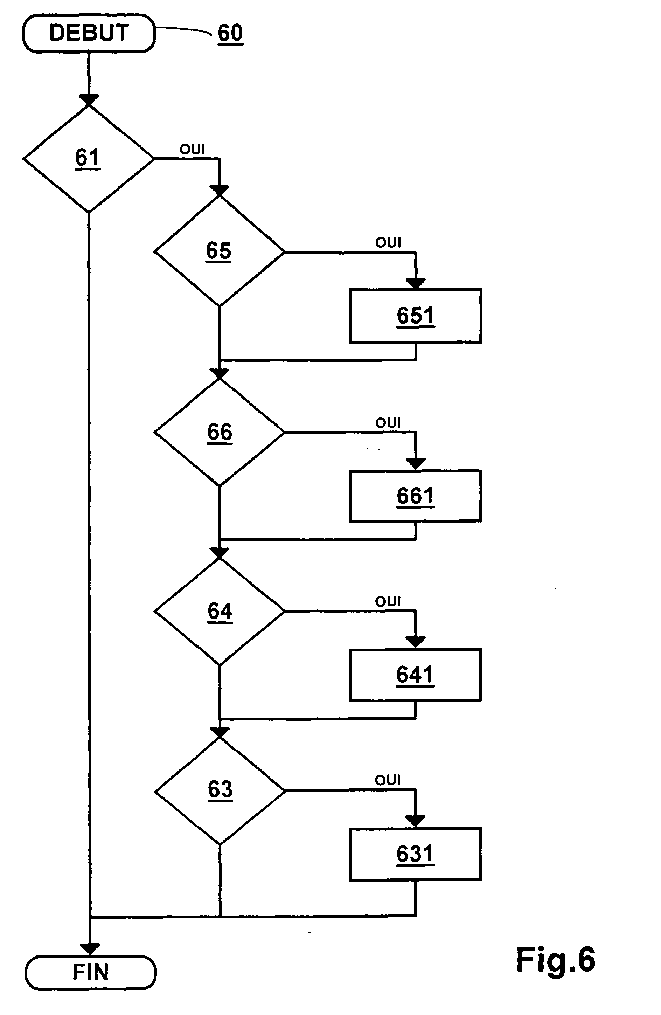

Le nombre et le type de tâches actives est indiqué au superviseur (12) par l'exécution du module de gestion des sélections SPMM dont le logigramme est représenté à la figure 6. La gestion effectuée par ce module commence par un test (61) pour déterminer si des sélections sont en attente dans la file.

Par la suite si le test (61) sur la file d'attente détermine que des sélections sont en attente, quand un client sélectionne un titre qu'il désire entendre, celui-ci est automatiquement écrit dans un fichier de file d'attente du système sur le disque dur.

Ainsi, chaque sélection faite ne sera jamais perdue en cas de panne électrique. Le système joue (reproduit) la sélection en entier avant de la retirer du fichier de la file d'attente.

Quand la sélection a été reproduite en entier, elle est retirée du fichier de file d'attente et est écrite dans le fichier de statistiques du système avec la date et l'heure d'achat, ainsi que la date et l'heure auxquelles elle a été exécutée.

Immédiatement après le transfert au fichier de statistiques de la sélection terminée, le système vérifie s'il y en a d'autres dans le fichier d'attente. S'il y en a une autre, le système commence immédiatement à jouer la sélection.

Le temps total écoulé entre la fin d'une sélection et le début de la suivante est inférieur à 0,5 seconde.

Il est possible d'allonger ce délai grâce à un bouton situé dans le panneau de contrôle du système.

Le traitement se poursuit par un test (65) pour déterminer si la sélection contient un scénario audio. Si oui, ce scénario est inscrit à l'étape (651) dans la file des tâches du superviseur (12). Si non, ou après cette inscription le traitement se poursuit par un test (66) pour déterminer si la sélection contient des images animées. Dans l'affirmative le scénario de la vidéo est inscrit à l'étape (661) dans la file des tâches du superviseur (12). Si non ou dans l'affirmative après cette inscription, le traitement se poursuit par un test (64) pour déterminer si la sélection contient un graphique fixe. Dans l'affirmative le scénario de la présentation graphique est inscrit à l'étape (641) dans la file des tâches du superviseur (12). Si non ou dans l'affirmative après cette inscription le traitement se poursuit par un test (63) pour déterminer si la sélection contient un scénario de publicité. Dans l'affirmative le scénario est inscrit à l'étape (631) dans la file des tâches du superviseur (12). Ainsi le superviseur (12) informé des tâches ouvertes peut gérer le déroulement des tâches simultanément.

Du fait, d'une part du mode de gestion des tâches en affectant la priorité la plus élevée à la tâche vidéo, d'autre part de la présence de tampons matériel ou logiciel affecté à chacune des tâches pour mémoriser temporairement des données et de la présence des tampons de statut relatif à chaque tâche, il a été possible de faire gérer toutes ces tâches par une seule unité centrale avec un système d'exploitation multitâche qui offre les possibilités d'un affichage vidéo c'est à dire d'images animées par opposition à une représentation graphique dans laquelle les informations à traiter sont moins complexes. Cette utilisation de présentation vidéo peut également se faire sans pénaliser le traitement du son par le fait que le circuit (5) de contrôleur de son comporte des tampons de taille suffisante pour mémoriser une quantité de données compressées suffisante afin de permettre pendant le traitement du son, le transfert de données vidéo vers un des tampons (66, 67) de la vidéo en attendant le transfert suivant de données de son.

De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audiovisuelles sont numérisées et stockées dans les moyens de mémorisation, il est utilisé considérablement moins de place que pour un système de reproduction audiovisuelle traditionnel et par conséquent l'encombrement du système selon l'invention est nettement moindre.

Lorsqu'il est question de tampons, il est rappelé que ceux-ci peuvent être présent soit physiquement sur le circuit auquel ils sont affectés soit réalisé par logiciel en réservant des emplacements de mémorisation dans la mémoire du système.

## Revendications

1. Système de reproduction audiovisuelle déclenché par paiement de redevances comprenant un dispositif à microprocesseur relié à un dispositif de paiement, ledit dispositif à microprocesseur comportant d'une part des moyens de mémorisation de masse, pour entre autres stocker, sous forme numérique compressée les informations visuelles et sonores à exploiter, et d'autre part étant relié, par l'intermédiaire d'interfaces, à des moyens numériques de visualisation et des moyens numériques de reproduction sonore permettant de créer un univers multimédia, caractérisé en ce que ledit système est géré au moyen d'un système d'exploitation multitâche incluant une librairie d'outils et de services intégrée dans les moyens de mémorisation, le noyau du système d'exploitation associant à chacun des moyens périphériques une tâche et affectant la priorité la plus élevée à la tâche visualisation et une priorité de niveau inférieur à la tâche son, au moins deux tampons (66, 67 respectivement 56, 57) utilisés alternativement pour le stockage temporaire des données à décompresser étant reliés à chaque moyen respectif de visualisation (6) et de reproduction sonore (5) pour permettre le traitement de l'information transférée dans l'un des tampons de visualisation ou de reproduction par l'un des moyens pendant le transfert dans l'autre tampon par le système d'exploitation et un module superviseur du système d'exploitation associant un tampon de statut (831) positionné à une valeur représentative de l'activité d'une tâche dès qu'un des tampons de stockage temporaire contient des données.

2. Système de reproduction audiovisuelle selon la revendication 1, caractérisé en ce qu'il est de plus, relié, par l'intermédiaire d'une interface (158), à un modem de télécommunications (4,41), ledit système étant alors connecté à un réseau de distribution d'informations audiovisuelles au moyen du modem de télécommunications, cette liaison de télécommunications étant également gérée par le système d'exploitation multitâche inclus dans la librairie d'outils et de services intégrée dans les moyens de mémorisation avec une priorité de niveau trois et associant a cette tâche de télécommunication un tampon temporaire (26) de stockage des données à transférer et un tampon (841) indicatif du statut de cette tâche

3. Système de reproduction audiovisuelle selon la revendication 1 ou 2, caractérisé en ce que le système d'exploitation comporte un module de résolution des priorités (11) qui en fonction des priorités affectées aux tâches déclarées actives va accuser réception de la requête d'une tâche ou répondre par un signal d'occupation, un module superviseur (12) qui en fonction des tâches déclarées actives et de la disponibilité des ressources matérielles suffisantes remplit une file d'attente de requêtes de mémorisation.

4. Système de reproduction audiovisuelle selon l'une des revendications précédentes, caractérisé en ce qu'un tampon temporaire (36) de stockage des données provenant d'une interface homme machine et un tampon de statut (831) indicatif du statut de cette tâche d'interface homme machine est associé à une tâche d'interface (73) telle que la sélection de zones sur un écran tactile, chaque zone correspondant à un choix parmi les informations affichées sur les moyens de visualisation.

5. Système de reproduction audiovisuelle selon l'une des revendications précédentes, caractérisé en ce que la tâche de priorité la plus basse est celle de gestion par le gérant pour à partir d'une télécommande (31) dont l'utilisation est validée par un commutateur de clé (32) effectuer la gestion de la base de donnée pour acquérir de nouvelles sélections ou effectuer toutes sorte de réglages commandables par la télécommande.

6. Système de reproduction audiovisuelle selon l'une des revendications précédentes, caractérisé en ce qu'il comporte un fichier statut d'opération du système maintenu sur le disque dur dans lequel le système enregistre les informations concernant l'entrée d'argent, l'ajout d'une sélection dans la file d'attente, la fin d'une sélection pour passer à la sélection suivante de façon à permettre au système de redémarrer exactement au même endroit dans le cas d'une interruption due à une panne.

7. Système de reproduction audiovisuelle selon l'une des revendications précédentes, caractérisé en ce que les moyens de visualisation comportent principalement un moniteur vidéo pour la reproduction des images des informations audiovisuelles et un écran tactile de contrôle et d'assistance sur lequel peuvent être sélectionnés au moins un tableau de contrôle parmi les suivants, un premier tableau de sélection de titres se déroulant pour aider à la recherche et à la sélection d'un titre désiré, un second tableau de contrôle de gestion pour le réglage du volume, des basses, des aiguës ou la commande de panoramiques sur le moniteur vidéo, un troisième tableau de balayage de la base de données de titres, d'utilisation privée, pour permettre l'exploration de la base de données contenant les titres disponibles au travers du réseau de distribution d'informations audiovisuelles, un quatrième tableau de statistiques, d'utilisation privée, pour les estimations et les calculs statistiques relatifs aux titres.

8. Système de reproduction audiovisuelle selon l'une des revendications précédentes, caractérisé en ce que le dispositif de télécommande infrarouge permet de réaliser au moins une des fonctions suivantes:
- réglage du volume sonore des sélections jouées,
- réglage du volume sonore de la source auxiliaire jouée,
- commande marche/arrêt du microphone,
- réglage du volume sonore du microphone,
- réglage balance, voie droite, voie gauche,
- contrôle du niveau des fréquences basses,
- contrôle du niveau des fréquences aiguës,
- commande d'annulation ou de saut de plage d'une sélection musicale,
- commande d'effets panoramiques, zoom avant, zoom arrière,
- déclenchement d'une remise à zéro du programme logiciel.

9. Système de reproduction audiovisuelle selon l'une des revendications précédentes, caractérisé en ce que un module de mode de gestion permet d'enregistrer dans un fichier les paramètres d'exploitation du système mémorisé sur le disque dur dans un format machine non lisible pour un utilisateur, les informations sauvegardées sur le disque étant relues à chaque démarrage du système.

10. Système de reproduction audiovisuelle selon la revendication 9, caractérisé en ce que le fichier des paramètres d'exploitation du système permet de fixer au moins un parmi la pluralité des paramètres ci-après constitués par le prix d'un titre ou le nombre de titres pour une valeur prédéterminée, le délai d'inactivité avant d'enclencher le mode promotionnel visuel, le délai d'inactivité avant d'enclencher une source auxiliaire telle que la radio par exemple, le délai d'inactivité avant d'enclencher le mode d'échantillonnage des sélections, l'endroit déterminé en secondes à partir du début où le système pourra démarrer l'échantillonnage d'une sélection, la durée en secondes de l'échantillon.

## Patentansprüche

1. Audiovisuelles Wiedergabesystem, das durch Zahlung von Gebühren gestartet wird, mit einer Mikroprozessorvorrichtung, die mit einer Bezahlungsvorrichtung verbunden ist, wobei die Mikroprozessorvorrichtung einerseits Massenspeichermittel enthält, die unter anderem in komprimierter digitaler Form die zu verwertenden visuellen und klanglichen Informationen speichern, und andererseits über Schnittstellen mit digitalen Anzeigemitteln und digitalen Klangwiedergabemitteln, die die Erzeugung eines Multimedia-Universums ermöglichen, verbunden ist, dadurch gekennzeichnet, daß das System durch ein Multitasking-Betriebssystem gesteuert wird, das eine Werkzeug- und Dienstebibliothek enthält, die in die Speichermittel integriert ist, wobei der Kern des Betriebssystems jedem Peripheriemittel eine Task zuordnet und die höchste Priorität der Anzeige-Task und eine Priorität mit niedrigerem Niveau der Klang-Task zuweist, wobei wenigstens zwei Puffer (66, 67 bzw. 56, 57), die abwechselnd für die temporäre Speicherung von zu dekomprimierenden Daten verwendet werden, mit dem Anzeigemittel (6) bzw. mit dem Klangwiedergabemittel (5) verbunden sind, um die Verarbeitung der an einen der Anzeige- oder Wiedergabe-Puffer übertragenen Informationen durch eines der Mittel während der Übertragung an den anderen Puffer durch das Betriebssystem zu ermöglichen, und wobei einem Überwachungsmodul des Betriebssystem ein Statuspuffer (831) zugeordnet ist, der auf einen Wert gesetzt wird, der die Aktivität einer Task angibt, sobald einer der Puffer für die temporäre Speicherung Daten enthält.

2. Audiovisuelles Wiedergabesystem nach Anspruch 1, dadurch gekennzeichnet, daß es außerdem über eine Schnittstelle (158) mit einem Telekommunikationsmodem (4, 41) verbunden ist, wobei das System dann an ein Netz zur Verteilung audiovisueller Informationen über das Telekommunikationsmodem angeschlossen ist, wobei diese Telekommunikationsverbindung ebenfalls durch das in der in die Speichermittel integrierte Werkzeug- und Dienstebibliothek enthaltene Multitasking-Betriebssystem mit einer Priorität mit Niveau drei gesteuert wird und jeder Telekommunikations-Task einen temporären Puffer (26) zum Speichern von zu übertragenden Daten und einen den Status dieser Task angebenden Puffer (841) zuweist.

3. Audiovisuelles Wiedergabesystem nach Anspruch 1 oder 2, dadurch gekennzeichnet, daß das Betriebssystem ein Modul zur Auflösung der Prioritäten (11), das in Abhängigkeit von den Prioritäten, die den als aktiv erklärten Tasks zugewiesen sind, den Empfang der Anforderung einer Task quittiert oder durch ein Belegtsignal antwortet, sowie ein Überwachungsmodul (12) enthält, das in Abhängigkeit von den als aktiv erklärten Tasks und von der Verfügbarkeit ausreichender Hardware-Betriebsmittel eine Speicheranforderung-Warteschlange füllt.

4. Audiovisuelles Wiedergabesystem nach einem der vorangehenden Ansprüche, dadurch gekennzeichnet, daß ein temporärer Puffer (36) zum Speichern von von einer Mensch/Maschine-Schnittstelle stammenden Daten und ein Statuspuffer (831), der den Status dieser Mensch/Maschine-Schnittstellen-Task angibt, einer Schnittstellen-Task (73), etwa der Wahl von Zonen auf einem Tastbildschirm, zugeordnet sind, wobei jede Zone einer Wahl der auf den Anzeigemitteln angezeigten Informationen entspricht.

5. Audiovisuelles Wiedergabesystem nach einem der vorangehenden Ansprüche, dadurch gekennzeichnet, daß die Task mit niedrigster Priorität diejenige der Steuerung durch die Bedienungsperson ist, um anhand einer Fernsteuerung (31), deren Verwendung durch einen Schlüssel-Ein/Aus-Schalter (32) validiert wird, die Steuerung der Datenbank auszuführen, um neue Auswahlvorgänge zu erfassen, oder um jegliche durch die Fernsteuerung steuerbaren Einstellungen ausfzuführen.

6. Audiovisuelles Wiedergabesystem nach einem der vorangehenden Ansprüche, dadurch gekennzeichnet, daß es eine Systemoperation-Statusdatei enthält, die auf der Festplatte gehalten wird und in der das System die Informationen aufzeichnet, die die Geldeingabe, die Hinzufügung einer Wahl in die Warteschlange und das Ende einer Wahl für den Übergang zur folgenden Wahl betreffen, um dem System zu ermöglichen, genau an derselben Stelle erneut zu starten, falls eine Unterbrechung aufgrund eines Fehlers erfolgt ist.

7. Audiovisuelles Wiedergabesystem nach einem der vorangehenden Ansprüche, dadurch gekennzeichnet, daß die Anzeigemittel hauptsächlich einen Videomonitor für die Wiedergabe von Bildern audiovisueller Informationen sowie einen Tastschirm für die Steuerung und die Unterstützung enthalten, auf dem wenigstens eine Steuertabelle aus den folgenden Tabellen gewählt werden kann: eine erste Tabelle für die Wahl abzuspielender Titeln, um die Suche und die Wahl eines gewünschten Titels zu unterstützen, eine zweite Tabelle für die Kontrolle der Steuerung zur Einstellung der Lautstärke, der Bässe, der Höhen oder der Panoramasteuerung auf dem Videomonitor, eine dritte Tabelle für die Abtastung der Titel-Datenbank mit privater Nutzung, die die Untersuchung der Datenbank ermöglicht, die die über das Netz zur Verteilung audiovisueller Informationen verfügbaren Titel enthält, und eine vierte Tabelle mit Statistiken für private Nutzung für die Schätzungen und statistischen Berechnungen bezüglich der Titel.

8. Audiovisuelles Wiedergabesystem nach einem der vorangehenden Ansprüche, dadurch gekennzeichnet, daß die Infrarot-Fernsteuerungsvorrichtung die Ausführung wenigstens einer der folgenden Funktionen ermöglicht:
- Einstellung der Lautstärke der gespielten gewählten Stücke,
- Einstellung der Lautstärke der gespielten Hilfsquelle,
- Steuern des Ein- und Ausschaltens des Mikrophons,
- Steuern der Lautstärke des Mikrophons,
- Steuern der Balance, des rechten Kanals und des linken Kanals,
- Steuern des Pegels der tiefen Frequenzen,
- Steuern des Pegels der hohen Frequenzen,
- Steuern der Löschung oder eines Bereichssprungs einer musikalischen Wahl,
- Steuern von Panoramaeffekten, Vorwärtszoom oder Rückwärtszoom,
- Starten einer Rücksetzung auf null des Software-Programms.

9. Audiovisuelles Wiedergabesystem nach einem der vorangehenden Ansprüche, dadurch gekennzeichnet, daß ein Steuerungsbetriebsart-Modul die Aufzeichnung der Betriebsparameter des Systems in einer auf der Festplatte gespeicherten Datei in einem für den Anwender nicht lesbaren Maschinenformat ermöglicht, wobei die auf der Platte gesicherten Informationen bei jedem Neustart des Systems erneut gelesen werden.

10. Audiovisuelles Wiedergabesystem nach Anspruch 9, dadurch gekennzeichnet, daß die Datei der Betriebsparameter des Systems die Fixierung wenigstens eines der mehreren folgenden Parameter ermöglicht, die gebildet sind durch den Preis eines Titels oder durch die Anzahl der Titel bei einem vorgegebenen Wert, durch die Verzögerung der Inaktivität vor dem Sperren des visuellen Promotion-Betriebs, durch die Verzögerung der Inaktivität vor dem Sperren einer Hilfsquelle wie etwa des Radios, durch die Verzögerung der Inaktivität vor dem Sperren des Wahl-Abtastmodus, durch die Stelle, die beginnend bei dem Anfang, bei dem das System die Abtastung einer Wahl erneut beginnen kann, in Sekunden bestimmt ist, und durch die Dauer des Abtastwerts in Sekunden.

## Claims

1. Audiovisual reproduction system triggered by payment of royalties, comprising a microprocessor device connected to a payment device, said microprocessor device comprising, on the one hand, mass storage means, in order *inter alia* to store in compressed digital form the visual and sound information to be used and, on the other hand being connected via interfaces to digital display means and digital sound-reproduction means allowing a multimedia universe to be created, characterised in that said system is managed by means of a multitasking operating system including a library of tools and services integrated into the storage means, the core of the operating system associating a task with each of the peripheral means and assigning the highest priority to the display task and a lower priority to the sound task, at least two buffers (66, 67 or, respectively, 56, 57) used alternately for the temporary storage of data to be decompressed, being connected to each respective display (6) and sound-reproduction (5) means in order to permit the processing of the information transferred into one of the display or reproduction buffers by one of the means during the transfer to the other buffer by the operating system, and a supervisor module of the operating system associating a status buffer (831) set to a value representing the activity of a task as soon as one of the temporary storage buffers contains data.

2. Audiovisual reproduction system according to Claim 1, characterised in that it is also connected, via an interface (158), with a telecommunications modem (4, 41), said system then being connected to an audiovisual information distribution network by means of the telecommunications modem, this telecommunications link also being managed by the multitasking operating system included in the library of tools and services integrated into the storage means with a priority level three and associating with this telecommunications task a temporary buffer (26) for storage of data to be transferred and a buffer (841) indicating the status of this task.

3. Audiovisual reproduction system according to Claim 1 or 2, characterised in that the operating system comprises a priority resolution module (11) which, as a function of the priorities assigned to the tasks declared to be active, acknowledges receipt of the request of a task or responds with a busy signal, a supervisor module (12) which, as a function of the tasks declared to be active and the availability of sufficient hardware resources, fills a queue of storage requests.

4. Audiovisual reproduction system according to one of the preceding claims, characterised in that a temporary buffer (36) for storing data from a man-machine interface and a status buffer (831) indicating the status of this man-machine interface task is associated with an interface task (73), such as the selection of zones on a touch-sensitive screen, each zone corresponding to a choice from the information displayed on the display means.

5. Audiovisual reproduction system according to one of the preceding claims, characterised in that the task with lowest priority is that of management by the manager in order to perform the management of the data base using a remote control (31), the use of which is validated by a key switch (32), in order to acquire new selections or perform all sorts of adjustments controllable by the remote control.

6. Audiovisual reproduction system according to one of the preceding claims, characterised in that it comprises a system operation status file held on the hard disk in which the system records information concerning the input of money, the addition of a selection to the queue, the end of a selection in order to go on to the next selection so as to allow the system to start up again at exactly the same place in the event of an interruption caused by a breakdown.

7. Audiovisual reproduction system according to one of the preceding claims, characterised in that the display means comprise mainly a video monitor for the reproduction of images of audiovisual information and a touch-sensitive screen for control and assistance, on which at least one control table can be selected from among the following: a first table for selecting titles, scrolling so as to help in searching for and selecting a desired title, a second management control table for adjusting the volume, bass or treble tone or controlling panning on the video monitor, a third table for scanning the database of titles, for private use, to allow exploration of the database containing the titles available through the audiovisual information distribution network, a fourth table of statistics, for private use, for statistical calculations and estimation in relation to the titles.

8. Audiovisual reproduction system according to one of the preceding claims, characterised in that the infrared remote control device makes it possible to perform at least one of the following functions:
- adjusting the sound level of the selections being played,
- adjusting the sound level of the auxiliary source being played,
- microphone on/off control,
- adjusting the sound level of the microphone,
- adjusting the right channel/left channel balance,
- checking the bass frequency level,
- checking the treble frequency level,
- controlling the cancellation or skipping of a music selection,
- controlling effects of panning, zooming in, zooming away,
- triggering the resetting of the software program.

9. Audiovisual reproduction system according to one of the preceding claims, characterised in that a management mode module makes it possible to record in a file the operating parameters of the system stored on the hard disk in a machine format not readable by a user, the information saved on the disk being reread each time the system starts up.

10. Audiovisual reproduction system according to Claim 9, characterised in that the file of operating parameters of the system makes it possible to set at least one from among the plurality of following parameters constituted by the price of a title or the number of titles for a predetermined value, the inactivity period before the visual promotion mode is activated, the inactivity period before an auxiliary source such as the radio is activated, the inactivity period before the selection sampling mode is activated, the particular place in seconds from the start where the system can start sampling a selection, the length in seconds of the sample.
